(19) Europäisches Patentamt
European Patent Office
Office européen des brevets

(11) **EP 4 148 031 A1**

(12) **EUROPEAN PATENT APPLICATION**
published in accordance with Art. 153(4) EPC

(43) Date of publication:
**15.03.2023 Bulletin 2023/11**

(21) Application number: **21800365.5**

(22) Date of filing: **07.05.2021**

(51) International Patent Classification (IPC):
**C04B 35/645** (2006.01)   **C04B 35/00** (2006.01)
**C04B 35/584** (2006.01)   **C04B 35/587** (2006.01)
**C04B 35/622** (2006.01)

(52) Cooperative Patent Classification (CPC):
**C04B 35/00; C04B 35/584; C04B 35/587;
C04B 35/622; C04B 35/645**

(86) International application number:
**PCT/JP2021/017471**

(87) International publication number:
**WO 2021/225158 (11.11.2021 Gazette 2021/45)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.05.2020 JP 2020082035**

(71) Applicant: **AGC INC.**
**Chiyoda-ku,**
**Tokyo 1008405 (JP)**

(72) Inventors:
• **OHKOSHI, Kazuto**
  **Tokyo 100-8405 (JP)**
• **SHINOHARA, Nobuhiro**
  **Tokyo 100-8405 (JP)**

(74) Representative: **Müller-Boré & Partner**
**Patentanwälte PartG mbB**
**Friedenheimer Brücke 21**
**80639 München (DE)**

(54) **METHOD FOR PRODUCING CERAMIC SINTERED BODY, AND CERAMIC SINTERED BODY**

(57)     A dense ceramic sintered body is appropriately manufactured. A manufacturing method for the ceramic sintered body includes: a step of performing heat treatment on a ceramic green body as a green body of ceramic powder under a first condition; a step of performing heat treatment, under a second condition with a higher pressure than the first condition, on the ceramic green body subjected to the heat treatment under the first condition; and a step of performing heat treatment, under a third condition with a higher pressure than the second condition, on the ceramic green body subjected to the heat treatment under the second condition to manufacture the ceramic sintered body.

FIG.1

```
         START
           │
           ▼                    ┌─ S10
  GENERATE CERAMIC GREEN BODY
           │
           ▼                    ┌─ S12
  PERFORM HEAT TREATMENT UNDER
        FIRST CONDITION
           │
           ▼                    ┌─ S14
  PERFORM HEAT TREATMENT UNDER
       SECOND CONDITION
           │
           ▼                    ┌─ S16
  PERFORM HEAT TREATMENT UNDER
        THIRD CONDITION
           │
           ▼
          END
```

EP 4 148 031 A1

**Description**

Field

The present invention relates to a manufacturing method for a ceramic sintered body and the ceramic sintered body.

Background

In manufacturing a ceramic sintered body, Hot Isostatic Pressing (HIP) processing is used in some cases. In the HIP processing, by applying heat treatment to a green body in a high pressure environment, a dense sintered body with few defects can be obtained.

To appropriately perform the HIP processing, density of the green body needs to be increased to some degree at a pre-step. Patent Literature 1 to Patent Literature 3 disclose a technique of performing the HIP processing after increasing the density of the green body using a Cold Isostatic Pressing (CIP) method of applying an isotropic pressure to the green body in water.

Citation List

Patent Literature

Patent Literature 1: Japanese Patent No. 4642956
Patent Literature 2: Japanese Patent No. 6075811
Patent Literature 3: Japanese Patent No. 6400478

Summary

Technical Problem

Herein, there is room for improvement for appropriately manufacturing a dense ceramic sintered body.

The present invention is made in view of such a situation, and an object thereof is to provide a manufacturing method for a ceramic sintered body capable of appropriately manufacturing a dense ceramic sintered body, and the ceramic sintered body.

Solution to Problem

To solve the problem above, a manufacturing method for a ceramic sintered body of the present disclosure comprises: a step of performing heat treatment on a ceramic green body as a green body of ceramic powder under a first condition; a step of performing heat treatment, under a second condition with a higher pressure than the first condition, on the ceramic green body subjected to the heat treatment under the first condition; and a step of performing heat treatment, under a third condition with a higher pressure than the second condition, on the ceramic green body subjected to the heat treatment under the second condition to manufacture the ceramic sintered body.

To solve the problem above, a ceramic sintered body of the present disclosure is a ceramic sintered body of silicon nitride having a ball shape, wherein assuming that a radius of the ceramic sintered body is r, a fracture toughness value ($K_{IC}$) in a region from a surface of the ceramic sintered body to $1/10r$ is equal to or larger than 6.5 MPa $\cdot m^{1/2}$, a difference $\Delta KA$ between a maximum value and a minimum value of the fracture toughness value in the region from the surface of the ceramic sintered body to $1/10r$ is equal to or smaller than 2.0 MPa $\cdot m^{1/2}$, and a difference $\Delta KB$ between a maximum value and a minimum value of the fracture toughness value in a region from $1/10r$ to $2/10r$ of the ceramic sintered body is equal to or smaller than 1.5 MPa $\cdot m^{1/2}$.

Advantageous Effects of Invention

According to the present invention, a dense ceramic sintered body can be appropriately manufactured.

Brief Description of Drawings

FIG. 1 is a flowchart for explaining a manufacturing method for a ceramic sintered body according to a present embodiment.
FIG. 2 is a flowchart for explaining details about a generation process of a ceramic green body.
FIG. 3 is a diagram illustrating a configuration example of a heat treatment furnace according to the present embodiment.
FIG. 4 is a graph indicating a fracture toughness value in a second implementation example.
FIG. 5 is a graph indicating a fracture toughness value in the second implementation example.

Description of Embodiments

The following describes a preferred embodiment of the present invention in detail with reference to the attached drawings. The present invention is not limited to the embodiment, and in a case in which there are a plurality of embodiments, the embodiments may be combined with each other. Numerical values encompass rounded numerical values.

(Ceramic sintered body)

In a manufacturing method according to the present embodiment, ceramic powder is formed to generate a ceramic green body, and the ceramic green body is heated to manufacture a ceramic sintered body. In the present embodiment, the ceramic sintered body is a sintered body of silicon nitride ($Si_3N_4$), and the ceramic powder is powder of silicon nitride. The ceramic sintered body may contain silicon nitride as a principal component, and may also contain a material other than silicon nitride, or inevitable impurities. For example, a content rate of silicon nitride with respect to the entire ceramic sintered body may be equal to or larger than 80%, equal to or larger than 83%, or equal to or larger than 85% in a weight ratio. The ceramic sintered body manufactured by using the present manufacturing method is used for a ball of a ball bearing (a bearing ball or the like), for example. However, a use of the ceramic sintered body is not limited thereto, but may be optional.
In this way, the manufacturing method according to the present embodiment is used for manufacturing the sintered body of silicon nitride. However, the manufacturing method may also be used for manufacturing a sintered body of any kind of ceramic, not limited to silicon nitride. That is, the ceramic sintered body is not limited to silicon nitride and may be a sintered body made of optional ceramic. The ceramic powder is not limited to silicon nitride and may be powder made of optional ceramic.

(Generation of ceramic green body)

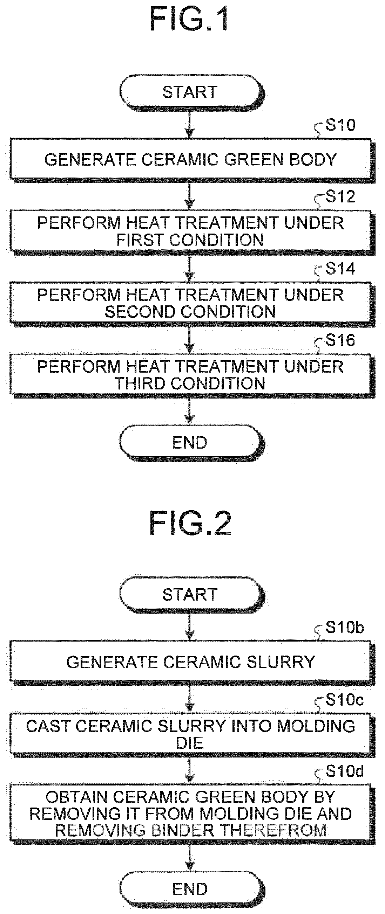

FIG. 1 is a flowchart for explaining a manufacturing method for a ceramic sintered body according to the present embodiment, and FIG. 2 is a flowchart for explaining details about a generation process of a ceramic green body. As illustrated in FIG. 1, in the present manufacturing method, first, the ceramic powder is formed to generate the ceramic green body (Step S10). In the present embodiment, the ceramic green body is generated by using a gel casting method.
FIG. 2 illustrates details about an example of the generation process of the ceramic green body using the gel casting method at Step S10 in FIG. 1. As illustrated in FIG. 2, at the time of generating the ceramic green body using the gel casting method, ceramic slurry is generated (Step SIOb). The ceramic slurry is slurry in which the ceramic powder is dispersed in a solvent. A method of generating the ceramic slurry is not particularly limited. A dispersant, a sintering aid, resin, and a resin curing agent may be appropriately added to the slurry containing the ceramic powder and the solvent depending on a type of the solvent or the like. For example, the ceramic slurry is generated such that slurry (hereinafter, also referred to as raw material ceramic slurry) is obtained first by mixing ceramic powder, a solvent, a dispersant, and a sintering aid, and resin and a resin curing agent are added to the raw material ceramic slurry thereafter to generate the ceramic slurry.
The ceramic powder is an essential component in a case of performing the gel casting method. The ceramic powder is, for example, powder of silicon nitride, aluminum nitride, titanium nitride, or silicon carbide.
The solvent is an essential component in a case of performing the gel casting method, which is liquid for uniformly mixing and forming the ceramic powder, the sintering aid, the resin, and the resin curing agent. The solvent may be, for example, water, an organic solvent, or alcohols that do not remain in the ceramic sintered body after sintering. As the alcohols, for example, methyl alcohol or ethyl alcohol can be used. As the organic solvent, for example, benzene, toluene, or xylene can be used. These solvents may be used alone, or may be appropriately mixed.
The dispersant is an additive for assisting dispersion of the ceramic powder in the solvent, and is an optional component. The dispersant is, for example, a pH regulator such as tetramethylammonium hydroxide, a polymer dispersant such as a polycarboxylate polymer, an inorganic dispersant such as phosphate including sodium hexametaphosphate or the like, or an organic surfactant-type dispersant of an anionic type, a cationic type, or a nonionic type.

The sintering aid is an additive for assisting sintering of the ceramic powder, and is an optional component. For example, in a case in which the ceramic powder is silicon nitride, powder of rare-earth oxide may be used as the sintering aid, the rare-earth oxide such as magnesium oxide (MgO), aluminum oxide ($Al_2O_3$), spinel (magnesia -alumina spinel; $MgO \cdot Al_2O_3$), yttrium oxide ($Y_2O_3$), and oxidation ytterbium ($Yb_2O_3$).

Before generating the slurry (raw material ceramic slurry), the ceramic powder prepared in advance is milled while being mixed to cause particle diameters of particles of the ceramic powder to be substantially uniform. For example, a ball mill is used for milling and mixing, but a method of milling and mixing may be optional.

At the time of generating the ceramic slurry, an addition amount of the ceramic powder with respect to the solvent is preferably equal to or larger than 35 volume% and equal to or smaller than 65 volume%, more preferably equal to or larger than 40 volume% and equal to or smaller than 60 volume%, and even more preferably equal to or larger than 45 volume% and equal to or smaller than 55 volume%. With such a compounding ratio, the ceramic green body can be appropriately generated. At the time of generating the ceramic slurry, an addition amount of the dispersant with respect to the ceramic powder is preferably equal to or larger than 0.3 weight% and equal to or smaller than 3 weight%, more preferably equal to or larger than 0.4 weight% and equal to or smaller than 2 weight%, and even more preferably equal to or larger than 0.5 weight% and equal to or smaller than 1 weight%. With such a compounding ratio, the ceramic green body can be appropriately generated. At the time of generating the ceramic slurry, an addition amount of the sintering aid with respect to the ceramic powder is preferably equal to or larger than 1 weight% and equal to or smaller than 15 weight%, more preferably equal to or larger than 2 weight% and equal to or smaller than 12 weight%, and even more preferably equal to or larger than 3 weight% and equal to or smaller than 9 weight%. With such a compounding ratio, the ceramic sintered body can be appropriately manufactured.

Next, the resin and the resin curing agent (polymerization initiator) are added to the mixed raw material ceramic slurry to generate the ceramic slurry (hereinafter, also referred to as casting ceramic slurry) (Step SlOb). More specifically, the resin and the resin curing agent (polymerization initiator) are added to the raw material ceramic slurry. The resin is resin that is polymerized and cured when the resin curing agent is added thereto. In the present embodiment, the resin is preferably resin (herein, water-soluble resin) that is soluble in the solvent of the ceramic slurry. Herein, the resin is a water-soluble epoxy resin, for example, but is not limited to the epoxy resin. The resin may be optional resin that is polymerized and cured when the resin curing agent is added thereto. The resin curing agent is an additive that is added to the resin to polymerize and cure the resin. Herein, the resin curing agent is an admixture of triethylenetetramine and dimethylaminomethyl, for example, but is not limited thereto. The resin curing agent may be an optional additive that is added to the resin to polymerize and cure the resin.

In the present embodiment, prepared are resin-added ceramic slurry (hereinafter, also referred to as first ceramic slurry) obtained by adding the resin to the raw material ceramic slurry, and curing agent-added ceramic slurry (hereinafter, also referred to as second ceramic slurry) obtained by adding the resin curing agent to the raw material ceramic slurry. The first ceramic slurry and the second ceramic slurry are then mixed to be mixed casting ceramic slurry.

In the present embodiment, an addition amount of the resin with respect to the ceramic powder in the ceramic slurry is preferably equal to or larger than 1 weight% and equal to or smaller than 10 weight%, more preferably equal to or larger than 1.5 weight% and equal to or smaller than 8 weight%, and even more preferably equal to or larger than 2 weight% and equal to or smaller than 5 weight%. With such a compounding ratio, the ceramic green body can be appropriately generated. An addition amount of the resin curing agent with respect to the resin is preferably a stoichiometrically appropriate amount for the resin to which the resin curing agent is added. With such a compounding ratio, the ceramic green body can be appropriately generated.

Next, the casting ceramic slurry is cast into a molding die (Step S10c). In the present embodiment, the resin and the resin curing agent are separately added to the raw material ceramic slurry, and they are mixed thereafter. That is, the first ceramic slurry and the second ceramic slurry are separately generated to be mixed, but the embodiment is not limited thereto. The resin and the resin curing agent may be both added to the raw material ceramic slurry, and the casting ceramic slurry to which both of them are added may be cast into the molding die.

In the present embodiment, the ceramic slurry is held at a predetermined holding temperature for a predetermined holding time in a state of being supplied to the molding die. Herein, the holding temperature is preferably equal to or higher than 25°C and equal to or lower than 100°C, more preferably equal to or higher than 30°C and equal to or lower than 80°C, and even more preferably equal to or higher than 40°C and equal to or lower than 60°C. Herein, the holding time is preferably equal to or longer than 1 hour and equal to or shorter than 48 hours, more preferably equal to or longer than 2 hours and equal to or shorter than 24 hours, and even more preferably equal to or longer than 3 hours and equal to or shorter than 12 hours. By setting such a holding temperature and holding time, the resin can be appropriately cured. In the present embodiment, press processing is not performed on the molding die to which the ceramic slurry is supplied. That is, a pressure higher than atmospheric pressure is not applied to the molding die to which the ceramic slurry is supplied.

At the time of supplying the ceramic slurry to the molding die, a pressure higher than the atmospheric pressure may be applied to the ceramic slurry.

After the holding time has elapsed, the ceramic green body can be obtained by removing (extracting) a cured body, which is cured ceramic slurry, from the molding die, and appropriately drying and removing binder from the cured body (Step S10d). Specifically, the removed cured body is dried to be a dried green body, and binder is removed from the dried green body to obtain the ceramic green body. Drying conditions herein are optional. For example, humidifying and drying processing and hot air drying processing are performed. In the humidifying and drying processing, the cured body is held for a time equal to or longer than 24 hours and equal to or shorter than 120 hours in an environment in which humidity is equal to or higher than 30% and equal to or lower than 98%, and the temperature is equal to or higher than 25°C and equal to or lower than 50°C. After the humidifying and drying processing ends, in the hot air drying processing, the dried green body is obtained by holding the cured body for a time equal to or longer than 3 hours and equal to or shorter than 48 hours while blowing air to the cured body in an environment in which the temperature is equal to or higher than 40°C and equal to or lower than 100°C. A method of removing binder is also optional. For example, the ceramic green body is obtained by holding the dried green body for a time equal to or longer than 2 hours and equal to or shorter than 12 hours in an environment in which the temperature is equal to or higher than 550°C and equal to or lower than 750°C to remove binder from the dried green body.

Herein, drying is a process for removing the solvent in the cured body, and removing binder is a process for removing the resin in the cured body (dried green body). If they are not sufficiently removed, a crack or the like may be caused during a sintering process, so that these processes are essential for the gel casting method.

A relative density of the ceramic green body formed by using the present manufacturing method is preferably equal to or higher than 40%, more preferably equal to or higher than 45%, and even more preferably equal to or higher than 50%. The relative density is preferably higher, but may be equal to or lower than 65%, equal to or lower than 60%, or equal to or lower than 55%. Herein, the relative density indicates a value obtained by dividing a green body density by a material density. The green body density is assumed to be a value obtained by dividing a volume obtained from dimensions of the ceramic green body by a weight of the ceramic green body. The material density is calculated from a composition ratio between the ceramic powder and the sintering aid and a theoretical density of each material.

For example, in a case of mixing the ceramic powder (molar mass a g/mol, theoretical density A g/cm$^3$) and the sintering aid (molar mass b g/mol, theoretical density B g/cm$^3$) at a composition ratio of X mol% and Y mol%, respectively, the material density can be calculated by the following expression (1).

$$(a \times X + b \times Y)/((a \times X/A) + (b \times Y/B)) \qquad (1)$$

In the present embodiment, the ceramic green body is prepared by using the gel casting method as described above. However, the method of generating the ceramic green body is not limited to the gel casting method, and may be an optional method. For example, a powder press method may be used, the powder press method for forming the ceramic green body by pressurizing the ceramic powder filled into the molding die.

(Heat treatment)

In the present manufacturing method, at least three stages of heat treatment are performed on the ceramic green body to manufacture the ceramic sintered body, the three stages of heat treatment including heat treatment under a first condition, heat treatment under a second condition, and heat treatment under a third condition. Herein, the heat treatment indicates processing for heating an object at a temperature equal to or higher than a temperature at which at least part of the ceramic powder starts to be sintered, and does not encompass processing at the ordinary temperature such as the CIP processing, for example. In the following description, the three stages of heat treatment including the heat treatment under the first condition, the heat treatment under the second condition, and the heat treatment under the third condition are performed, but the embodiment is not limited thereto. Four or more stages of heat treatment may be performed. Before the heat treatment, the CIP processing may be performed on the ceramic green body (dried green body). Through the CIP processing, a pressure can be isotropically applied to the ceramic green body, and the relative density of the green body can be increased.

(Heat treatment under first condition)

First, the following describes the heat treatment under the first condition. As illustrated in FIG. 1, after the ceramic green body is generated, the heat treatment under the first condition is performed on the ceramic green body (Step S12). Herein, as the first condition, a temperature for heating the ceramic green body is assumed to be a first heating temperature, a pressure applied to the ceramic green body is assumed to be a first pressure, and a heating time is assumed to be a first heating time. The first condition, that is, the first heating temperature, the first pressure, and the first heating time may be appropriately set depending on a property of the ceramic powder, an addition amount or a type of the sintering aid, the relative density, a shape, and dimensions of the ceramic green body, and the like. For example, for silicon nitride, the first heating temperature is preferably equal to or higher than 1600°C and equal to or lower than 1800°C, more preferably equal to or higher than 1620°C and equal to or lower than 1780°C, and even more preferably equal to or higher than 1650°C and equal to or lower than 1750°C. By causing the heating temperature to fall within this range, the relative density of the sintered body can be caused to fall within an appropriate range. The first pressure is preferably equal to or higher than 0.01 MPa and equal to or lower than 5 MPa, more preferably equal to or higher than 0.05 MPa and equal to or lower than 3 MPa, and even more preferably equal to or higher than 0.1 MPa and equal to or lower than 1 MPa. By causing the first pressure to fall within this range, the relative density of the sintered body can be caused to fall within an appropriate range. More specifically, in view of a mass production property and easiness of operation, the heat treatment under the first condition is most preferably performed at a normal pressure (atmospheric pressure), that is, 0.1 MPa. The first heating time is preferably equal to or longer than 1 hour and equal to or shorter than 20 hours, more preferably equal to or longer than 2 hours and equal to or shorter than 18 hours, and even more preferably equal to or longer than 5 hours and equal to or shorter than 15 hours. By causing the first heating time to fall within this range, the relative density of the sintered body can be caused to fall within an appropriate range.

In the present embodiment, the heat treatment under the first condition is performed in a nitrogen atmosphere. By performing the heat treatment under the first condition in the nitrogen atmosphere, sintering of the ceramic powder, which is silicon nitride, can be appropriately performed.

The ceramic green body is subjected to the first sintering, that is, primary sintering by being subjected to the heat treatment under the first condition as described above. By performing the heat treatment under the first condition at a low pressure first, pores in the sintered body can be reduced, and the heat treatment under the second condition and the third condition at a latter stage can be effectively performed.

Herein, assuming that the ceramic green body subjected to the heat treatment under the first condition is a first sintered body, a relative density of the first sintered body is preferably equal to or higher than 85%, more preferably equal to or higher than 90%, and even more preferably equal to or higher than 95%. The relative density herein is a value obtained by dividing the density of the first sintered body that is measured according to JIS R 1634 by the material density calculated from the composition ratio between the ceramic powder and the sintering aid and the theoretical density of each material. By causing the relative density to fall within this range, the heat treatment under the second condition and the third condition at a latter stage can be effectively performed.

(Heat treatment under second condition)

Next, the following describes the heat treatment under the second condition. As illustrated in FIG. 1, after the heat treatment under the first condition is performed, the heat treatment under the second condition is performed on the ceramic green body subjected to the heat treatment under the first condition, that is, the first sintered body (Step S14). The heat treatment under the second condition is heat treatment in a higher pressure environment than the heat treatment under the first condition, and can be said to be Gas Pressure Sintering (GPS) processing. Herein, as the second condition, a temperature for heating the first sintered body is assumed to be a second heating temperature, a pressure applied to the first sintered body is assumed to be a second pressure, and a heating time is assumed to be a second heating time. The second heating temperature is preferably higher than the first heating temperature of the first condition, but may be a temperature equal to or lower than the first heating temperature. The second heating temperature is preferably equal to or higher than 1650°C and equal to or lower than 1900°C, more preferably equal to or higher than 1680°C and equal to or lower than 1850°C, and even more preferably equal to or higher than 1700°C and equal to or lower than 1800°C. By causing the second heating temperature to fall within this range, the heat treatment under the third condition at a latter stage can be effectively performed. The second pressure is higher than the first pressure in the heat treatment under the first condition. A difference between the second pressure and the first pressure is preferably equal to or higher than 0.3 MPa and equal to or lower than 20 MPa, more preferably equal to or higher than 1 MPa and equal to or lower than 18 MPa, and even more preferably equal to or higher than 2 MPa and equal to or lower than 15 MPa. The second pressure is preferably equal to or higher than 0.5 MPa and equal to or lower than 20 MPa, more preferably equal to or higher than 3 MPa and equal to or lower than 18 MPa, and even more preferably equal to or higher than 5 MPa and equal to or lower than 15 MPa. By causing the second pressure to fall within this range, the heat treatment under the third condition at a latter stage can be effectively performed. More specifically, by causing the second pressure to be equal to or higher than 0.5 MPa, an effect of pressure heat treatment can be appropriately maintained, and by causing the second pressure to be equal to or lower than 20 MPa, it is possible to prevent high-pressure gas from penetrating into the pores of the first sintered body, and cause the relative density after sintering to be an appropriate value. The second heating time is preferably shorter than the first heating time. The second heating time is preferably equal to or longer than 0.1 hours and equal to or shorter than 10 hours, more preferably equal to or longer than 0.15 hours and equal to or shorter than 8 hours, and even more preferably equal to or longer than 0.2 hours and equal to or shorter than 6 hours. By causing the second heating time to fall within this range, the heat treatment under the third condition at a latter stage can be effectively performed.

In the present embodiment, the heat treatment under the second condition is performed in a nitrogen atmosphere. By performing the heat treatment under the second condition in the nitrogen atmosphere, sintering of the ceramic powder, which is silicon nitride, can be appropriately performed.

The heat treatment under the second condition may be performed after finishing the heat treatment under the first condition and extracting and cooling the first sintered body, or may be continuously performed following the heat treatment under the first condition without cooling the first sintered body.

The first sintered body is subjected to the second sintering, that is, secondary sintering by being subjected to the heat treatment under the second condition as described above. By performing the heat treatment under the second condition at a higher pressure than the first condition, it can be considered that fine open pores on a surface of the sintered body are reduced and the surface is densified. Accordingly, in the heat treatment under the third condition at a latter stage, it is possible to prevent high-pressure gas from penetrating into the inside of the sintered body, and the heat treatment under the third condition can be effectively performed.

Herein, the ceramic green body subjected to the heat treatment under the second condition, that is, the first sintered body subjected to the heat treatment under the second condition is assumed to be a second sintered body, a relative density of the second sintered body is preferably equal to or higher than 95%, and more preferably equal to or higher than 97%. The relative density of the second sintered body is preferably higher, but may be equal to or lower than 99%. By causing the relative density to fall within this range, the heat treatment under the third condition at a latter stage can be effectively performed.

(Heat treatment under third condition)

Next, the following describes the heat treatment under the third condition. As illustrated in FIG. 1, after the heat treatment under the second condition is performed, the heat treatment under the third condition is performed on the ceramic green body subjected to the heat treatment under the second condition, that is, the second sintered body (Step S16) to generate the ceramic sintered body. The heat treatment under the third condition is heat treatment in a higher pressure environment than the heat treatment under the second condition, and can be said to be HIP processing. Herein, as the third condition, a temperature for heating the second sintered body is assumed to be a third heating temperature, a pressure applied to the second sintered body is assumed to be a third pressure, and a heating time is assumed to be a third heating time. The third heating temperature is preferably higher than the first heating temperature of the first condition, but may be a temperature equal to or lower than the first heating temperature. The third heating temperature may be higher than the second heating temperature of the second condition, or may be a temperature equal to or lower than the second heating temperature. The third heating temperature is preferably equal to or higher than 1650°C and equal to or lower than 1900°C, more preferably equal to or higher than 1680°C and equal to or lower than 1850°C, and even more preferably equal to or higher than 1700°C and equal to or lower than 1800°C. By causing the third heating temperature to fall within this range, the relative density of the ceramic sintered body can be caused to be an appropriate value. The third pressure is higher than the second pressure in the heat treatment under the second condition. A difference between the third pressure and the second pressure is preferably equal to or higher than 30 MPa and equal to or lower than 180 MPa, more preferably equal to or higher than 40 MPa and equal to or lower than 160 MPa, and even more preferably equal to or higher than 50 MPa and equal to or lower than 130 MPa. The third pressure is preferably equal to or higher than 50 MPa and equal to or lower than 200 MPa, more preferably equal to or higher than 60 MPa and equal to or lower than 180 MPa, and even more preferably equal to or higher than 70 MPa and equal to or lower than 150 MPa. By causing the third pressure to fall within this range, the relative density of the ceramic sintered body can be caused to be an appropriate value. The third heating time is preferably equal to or longer than 0.1 hours and equal to or shorter than 10 hours, more preferably equal to or longer than 0.15 hours and equal to or shorter than 8 hours, and even more preferably equal to or longer than 0.2 hours and equal to or shorter than 6 hours. By causing the third heating time to fall within this range, the relative density of the ceramic sintered body can be caused to be an appropriate value.

In the present embodiment, the heat treatment under the third condition is performed in a nitrogen atmosphere. By performing the heat treatment under the third condition in the nitrogen atmosphere, sintering of the ceramic powder, which is silicon nitride, can be appropriately performed.

The heat treatment under the third condition may be performed after finishing the heat treatment under the second condition and extracting and cooling the second sintered body, or may be continuously performed following the heat treatment under the second condition without cooling the second sintered body.

The second sintered body is subjected to the third sintering, that is, tertiary sintering by being subjected to the heat treatment under the third condition as described above. By performing the HIP processing under the third condition after sintering under the first condition and the second condition, that is, by performing sintering in a stepwise manner while increasing the pressure, the HIP processing can be appropriately performed and the dense ceramic sintered body can be manufactured without performing the CIP processing, for example.

(Characteristics of ceramic sintered body)

The relative density of the ceramic sintered body after being subjected to the heat treatment under the third condition is preferably equal to or higher than 99%. By causing the relative density to fall within this range, performance of the ceramic sintered body can be ensured.

Regarding the ceramic sintered body, a three-point bending strength with a span of 30 mm measured by using a method defined by JIS R 1669 is preferably equal to or higher than 900 MPa, more preferably equal to or higher than 910 MPa, and even more preferably equal to or higher than 915 MPa. By causing the three-point bending strength to fall within this range, the strength of the ceramic sintered body can be appropriately maintained. Regarding the ceramic sintered body, a fracture toughness value measured by using a method defined by JIS R 1669 is preferably equal to or larger than 5.0 MPa $\cdot$m$^{1/2}$, more preferably equal to or larger than 5.5 MPa $\cdot$m$^{1/2}$, and even more preferably equal to or larger than 6.0 MPa $\cdot$m$^{1/2}$. By causing the fracture toughness value to fall within this range, the strength of the ceramic sintered body can be appropriately maintained. Regarding the ceramic sintered body, the number of pores having a size equal to or larger than 5 $\mu$m that are observed by using an optical microscope with respect to an area equal to or larger than 1 mm$^2$ on a surface obtained by polishing an optional cross section is preferably equal to or smaller than 20, more preferably equal to or smaller than 15, and even more preferably equal to or smaller than 10 per area of 1 mm$^2$. Regarding the ceramic sintered body, a maximum diameter of the pores is preferably equal to or smaller than 25 $\mu$m, more preferably equal to or smaller than 15 $\mu$m, and even more preferably equal to or smaller than 10 $\mu$m. By causing the number of pores and the maximum diameter to fall within this range, performance of the ceramic sintered body can be ensured.

(Diameter)

The ceramic sintered body is preferably a sintered body of silicon nitride having a ball shape. The ball shape herein is not limited to a true sphere. For example, sphericity with respect to the diameter may be preferably equal to or lower than 3%, more preferably equal to or lower than 2.5%, and even more preferably equal to or lower than 2%, for example. For example, if the sintered body has the diameter of 50 mm, the sphericity is preferably equal to or lower than 1.5 mm, more preferably equal to or lower than 1.25 mm, and even more preferably equal to or lower than 1.0 mm. For example, if the sintered body has the diameter of 10 mm, the sphericity is preferably equal to or lower than 0.3 mm, more preferably equal to or lower than 0.25 mm, and even more preferably equal to or lower than 0.2 mm. The diameter of the ceramic sintered body is preferably equal to or larger than 0.5 mm and equal to or smaller than 80 mm, more preferably equal to or larger than 30 mm and equal to or smaller than 55 mm, and even more preferably equal to or larger than 49 mm and equal to or smaller than 51 mm. By causing the diameter to fall within this range, the ceramic sintered body can be preferably used for a bearing ball or the like, for example. The diameter herein may indicate an average diameter (an arithmetic average value of a maximum value and a minimum value of the diameter). Hereinafter, a radius of the ceramic sintered body is denoted by r. The radius r may be a value half of the diameter of the ceramic sintered body.

(Fracture toughness value)

Regarding the ceramic sintered body, a fracture toughness value ($K_{IC}$) in a region (range) from the surface to a depth of r/10 is preferably equal to or larger than 6.5 MPa $\cdot$m$^{1/2}$.

Regarding the ceramic sintered body, a difference $\Delta KA$ between a maximum value and a minimum value of the fracture toughness value in the range from the surface to the depth of r/10 is preferably equal to or smaller than 2.0 MPa $\cdot$m$^{1/2}$, more preferably equal to or smaller than 1.5 MPa $\cdot$m$^{1/2}$, and even more preferably equal to or smaller than 1.2 MPa $\cdot$m$^{1/2}$.

Regarding the ceramic sintered body, a difference $\Delta KB$ between a maximum value and a minimum value of the fracture toughness value in a range from a position at the depth of r/10 below the surface to the depth of 2r/10 below the surface is preferably equal to or smaller than 1.5 MPa $\cdot$m$^{1/2}$, more preferably equal to or smaller than 1.0 MPa $\cdot$m$^{1/2}$, and even more preferably equal to or smaller than 0.7 MPa $\cdot$m$^{1/2}$.

When the fracture toughness value in the range from the surface to the depth of r/10 falls within this range, dropping off of particles or the like due to a microscopic fracture can be suppressed, and the ceramic sintered body can be prevented from wearing. When $\Delta KA$ and $\Delta KB$ fall within this range, variation in the fracture toughness value is reduced, the ceramic sintered body is densified, and nonuniformity of the particles is suppressed, so that the ceramic sintered body can be more preferably prevented from wearing. In other words, regarding the ceramic sintered body according to the present embodiment, the fracture toughness value in the vicinity of the surface is particularly high, and upper and lower variation in the fracture toughness value is small. Thus, wear resistance of the ceramic sintered body can be improved, and the ceramic sintered body excellent in a sliding characteristic can be provided, for example.

The fracture toughness value in the range from the surface to the depth of r/10 and the fracture toughness value in the range from the position at the depth of r/10 below the surface to the depth of 2r/10 below the surface are obtained by cutting out the ceramic sintered body in a disc shape to pass through the diameter, polishing one of cutting surfaces thereafter, and measuring the fracture toughness value at each position along a radial direction of the ball. That is, for example, the fracture toughness value in the range from the surface to the depth of r/10 indicates the fracture toughness value in a region from a periphery to a position distant from the periphery by r/10 toward a center side on the cutting surface. The fracture toughness value can be measured under the condition that a load is 5 kg and a push-in time is 15 seconds by using a Vickers hardness testing system ARS9000 manufactured by FUTURE-TECH CORP. The same method for measuring the fracture toughness value may be used in the following.

The range from the surface to the depth of r/10 of the ceramic sintered body can also be represented as a range from the surface to the depth of 2.5 mm, for example. The range from the position at the depth of r/10 below the surface to the depth of 2r/10 below the surface of the ceramic sintered body can also be represented as a range from a position at the depth of 2.5 mm below the surface to a position at the depth of 5.0 mm below the surface.

Regarding the ceramic sintered body, the fracture toughness value in a range from the surface to the depth of 2r/10 is preferably equal to or larger than 6.5 MPa $\cdot$m$^{1/2}$.

When the fracture toughness value in the range from the surface to the depth of 2r/10 falls within this range, dropping off of particles and the like due to a microscopic fracture can be suppressed, and the ceramic sintered body can be more preferably prevented from wearing.

The range from the surface to the depth of 2r/10 of the ceramic sintered body can also be represented as a range from the surface to the depth of 5.0 mm, for example.

Regarding the ceramic sintered body, an average value of the fracture toughness value in a range from the surface to the depth of 4r/10 is preferably equal to or larger than 7.0 MPa $\cdot$m$^{1/2}$.

When the average value of the fracture toughness value in the range from the surface to the depth of 4r/10 falls within this range, dropping off of particles and the like due to a microscopic fracture can be suppressed, and the ceramic sintered body can be more preferably prevented from wearing.

The range from the surface to the depth of 4r/10 of the ceramic sintered body can also be represented as a range from the surface to the depth of 10.0 mm, for example.

Regarding the ceramic sintered body, a standard deviation of the fracture toughness value in the range from the surface to the depth of r/10 is preferably equal to or smaller than 0.70, more preferably equal to or smaller than 0.60, and even more preferably equal to or smaller than 0.40.

When the standard deviation of the fracture toughness value in the range from the surface to the depth of r/10 falls within this range, variation in the fracture toughness value is reduced, the ceramic sintered body is densified, and nonuniformity of the particles is suppressed, so that the ceramic sintered body can be more preferably prevented from wearing.

Regarding the ceramic sintered body, the standard deviation of the fracture toughness value in the range from the surface to the depth of 4r/10 is preferably equal to or smaller than 0.55, more preferably equal to or smaller than 0.50, and even more preferably equal to or smaller than 0.48.

When the standard deviation of the fracture toughness value in the range from the surface to the depth of 4r/10 falls within this range, variation in the fracture toughness value is reduced, the ceramic sintered body is densified, and nonuniformity of the particles is suppressed, so that the ceramic sintered body can be more preferably prevented from wearing.

(Hardness)

Regarding the ceramic sintered body, Vickers hardness in the range from the surface to the depth of 2r/10 is preferably equal to or higher than 10 HV, more preferably equal to or higher than 12 HV, and even more preferably equal to or higher than 14 HV.

When the Vickers hardness in the range from the surface to the depth of 2r/10 falls within this range, dropping off of particles and the like due to a microscopic fracture can be suppressed, and the ceramic sintered body can be more preferably prevented from wearing.

The Vickers hardness in the range from the surface to the depth of 2r/10 can be obtained by cutting out the ceramic sintered body in a disc shape to pass through the diameter, polishing one of cutting surfaces thereafter, and measuring the Vickers hardness at each position along the radial direction of the ball. That is, for example, the fracture toughness value in the range from the surface to the depth of 2r/10 indicates the Vickers hardness in a region from the periphery to a position distant from the periphery by 2r/10 toward the center side on the cutting surface. The Vickers hardness can be measured under the condition that the load is 5 kg and the push-in time is 15 seconds by using the Vickers hardness testing system ARS9000 manufactured by FUTURE-TECH CORP.

The ceramic sintered body according to the present embodiment is manufactured by using the manufacturing method described in the present embodiment, but any manufacturing method having the characteristics described above may be used.

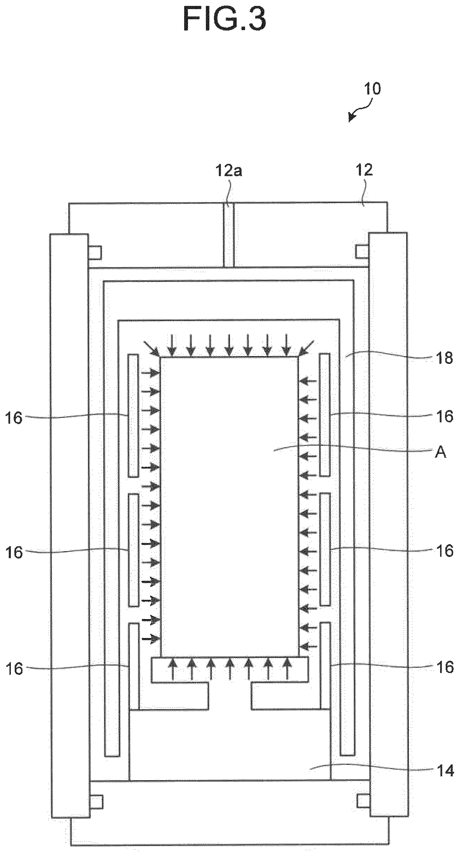

FIG. 3 is a diagram illustrating a configuration example of a heat treatment furnace according to the present embodiment. In the present embodiment, the heat treatment under the third condition, that is, the HIP processing may be performed by using a heat treatment furnace 10 illustrated in FIG. 3. The heat treatment furnace 10 is a furnace with which the HIP processing can be performed. As illustrated in FIG. 3, the heat treatment furnace 10 includes a container 12, a base 14, heating units 16, and a heat insulating unit 18. The base 14 is a base on which a second sintered body A as an object to be subjected to heat treatment is disposed. The heating units 16 are heaters disposed around a space in which the second sintered body is disposed on the base 14, and heat the second sintered body A on the base 14. The heat insulating unit 18 is a member that covers the heating units 16 and the space in which the second sintered body A is disposed on the base 14. The heat insulating unit 18 is constituted of a member having a high insulating property, and insulates an interior space from an exterior space. The container 12 is a container that houses the base 14, the heating units 16, and the heat insulating unit 18. A gas introduction port 12a is formed on the container 12. At the time of performing the heat treatment under the third condition, the inside of the container 12 is pressurized to a third pressure in a nitrogen atmosphere by disposing the second sintered body A on the base 14 and supplying nitrogen through the gas introduction port 12a. An isotropic pressure of the third pressure is applied to the second sintered body A. By heating the second sintered body A to the third heating temperature by the heating units 16 and holding it for the third heating time, the heat treatment, that is, the HIP processing is performed on the second sintered body A to generate the ceramic sintered body.

The heat treatment furnace 10 may also be used for the heat treatment under the first condition, or may be used for the heat treatment under the second condition. By using the same heat treatment furnace 10, the heat treatment under the first condition, the heat treatment under the second condition, and the heat treatment under the third condition can be continuously performed. However, the configuration of the heat treatment furnace 10 is merely an example. In the present manufacturing method, the heat treatment under the first condition, the heat treatment under the second condition, and the heat treatment under the third condition may be performed by using an optional facility.

As described above, the manufacturing method for the ceramic sintered body according to the present embodiment includes: a step of performing heat treatment on the ceramic green body as a green body of ceramic powder under the first condition; a step of performing heat treatment, under the second condition with a higher pressure than the first condition, on the ceramic green body (first sintered body) subjected to the heat treatment under the first condition; and a step of performing heat treatment, under the third condition with a higher pressure than the second condition, on the ceramic green body (second sintered body) subjected to heat treatment under the second condition to manufacture the ceramic sintered body.

In the present manufacturing method, the heat treatment is performed in a stepwise manner while increasing the pressure under the first condition, the second condition, and the third condition, so that it is possible to appropriately manufacture a dense ceramic sintered body having high strength from which the pores are sufficiently removed. Particularly, in a case of performing the heat treatment at a high pressure, high-pressure gas may penetrate into the pores unless the pores are removed in some degree, and there is the possibility that sintering cannot be appropriately performed. On the other hand, in the present manufacturing method, by increasing the pressure in a stepwise manner to perform the heat treatment, air bubbles can be appropriately removed, and the heat treatment at high pressure can be appropriately performed.

According to the present manufacturing method, the CIP processing before the heat treatment at high pressure is not required. In the CIP processing, a workload may be increased such that the green body is required to be sealed by a rubber mold or the like to prevent penetration of water, and it is difficult to deal with a complicated shape. On the other hand, if the CIP processing is not performed, there is the possibility that the HIP processing cannot be appropriately performed and a dense sintered body cannot be manufactured. In contrast, according to the present manufacturing method, the HIP processing at high pressure can be appropriately performed without performing the CIP processing because the heat treatment is performed in a stepwise manner while increasing the pressure under the first condition, the second condition, and the third condition, so that a dense ceramic sintered body having a complicated shape can be manufactured while reducing the workload.

In the present manufacturing method, a difference between the second pressure applied to the ceramic green body at the step of performing the heat treatment under the second condition and the first pressure applied to the ceramic green body at the step of performing the heat treatment under the first condition is preferably equal to or higher than 0.3 MPa and equal to or lower than 20 MPa, and a difference between the third pressure applied to the ceramic green body at the step of performing the heat treatment under the third condition and the second pressure is preferably equal to or higher than 30 MPa and equal to or lower than 180 MPa. By causing differences between the respective pressures to fall within this range, the heat treatment can be appropriately performed in a stepwise manner while increasing the pressure, and a dense ceramic sintered body can be appropriately manufactured.

In the present manufacturing method, the first pressure applied to the ceramic green body at the step of performing the heat treatment under the first condition is preferably equal to or higher than 0.01 MPa and equal to or lower than 5 MPa, the pressure applied to the ceramic green body (first sintered body) at the step of performing the heat treatment under the second condition is preferably equal to or higher than 0.5 MPa and equal to or lower than 20 MPa, and the pressure applied to the ceramic green body (second sintered body) at the step of performing the heat treatment under the third condition is preferably equal to or higher than 50 MPa and equal to or lower than 200 MPa. By causing the respective pressures to fall within this range, the heat treatment can be appropriately performed in a stepwise manner while increasing the pressure, and a dense ceramic sintered body can be appropriately manufactured.

In the present manufacturing method, the temperature (first heating temperature) for the heat treatment under the first condition is preferably equal to or higher than 1600°C and equal to or lower than 1800°C, the temperature (second heating temperature) for the heat treatment under the second condition is preferably equal to or higher than 1700°C and equal to or lower than 1900°C, and the temperature (third heating temperature) for the heat treatment under the third condition is preferably equal to or higher than 1700°C and equal to or lower than 1900°C. By causing the respective heating temperatures to fall within this range, the heat treatment can be appropriately performed in a stepwise manner while increasing the pressure, and a dense ceramic sintered body can be appropriately manufactured.

The present manufacturing method preferably further includes a step of forming the ceramic powder by using the gel casting method to generate the ceramic green body. By using the gel casting method, the ceramic green body can be appropriately generated. Additionally, by using the gel casting method, the ceramic green body having a complicated shape can be easily manufactured.

The ceramic sintered body is preferably a sintered body of silicon nitride. According to the present manufacturing method, a dense sintered body of silicon nitride can be appropriately manufactured.

At the steps of performing the heat treatment under the first condition, the second condition, and the third condition, the heat treatment is preferably performed on the ceramic green body in a nitrogen atmosphere. By performing the heat treatment in the nitrogen atmosphere, a dense sintered body of silicon nitride can be appropriately manufactured.

Regarding the ceramic sintered body manufactured by performing the heat treatment under the third condition, the three-point bending strength with a span of 30 mm measured by using the method defined by JIS R 1669 is preferably equal to or higher than 900 MPa, the fracture toughness value measured by using the method defined by JIS R 1669 is preferably equal to or larger than 5.0 MPa $\cdot m^{1/2}$, the number of pores having a size equal to or larger than 5 $\mu$m that are observed by using an optical microscope with respect to an area equal to or larger than 1 $mm^2$ on a surface obtained by polishing an optional cross section is preferably equal to or smaller than 10 per area of 1 $mm^2$, and the maximum diameter of the pores is preferably equal to or smaller than 10 $\mu$m. According to the present manufacturing method, by manufacturing the ceramic sintered body having such a characteristic, the ceramic sintered body having high performance can be provided.

(Implementation example 1)

Next, the following describes an implementation example 1. Table 1 indicates manufacturing conditions for the ceramic sintered bodies according to the respective examples and evaluation results of the manufactured ceramic sintered bodies.

Table 1

| | | Forming condition | | Characteristic of green body | | First condition | | | Characteristic of first sintered body | | Second condition | | | Characteristic of second sintered body | | Third condition | | | Characteristic of ceramic sintered body | | | | | | | | |
|---|---|---|---|---|---|---|---|---|---|---|---|---|---|---|---|---|---|---|---|---|---|---|---|---|---|---|---|---|
| | | Sp amount | CIP | Green body density | Relative density | Pressure | Temperature | Time | Sintered body density | Relative density | Pressure | Temperature | Time | Sintered body density | Relative density | Pressure | Temperature | Time | Density | Determination | Average strength | Determination | Pore frequency | Determination | Average pore diameter | Determination | Maximum pore diameter | Determination |
| | | mol% | | g/cm³ | % | MPa | °C | h | g/cm³ | % | MPa | °C | h | g/cm³ | % | MPa | °C | h | g/cm³ | | MPa | | Number of pores/mm² | | μm | | μm | |
| Without CIP Heat treatment under first condition | Example 1 | 2.8 | - | 1.7 | 53.05 | 0.1 | 1600 | 10 | 2.94 | 91.88 | 10 | 1700 | 1.5 | 3.14 | 98.13 | 100 | 1750 | 2 | 3.18 | ◎ | 1082 | ◎ | 6.1 | ◎ | 6.3 | ◎ | 9.8 | ◎ |
| | Example 2 | 4 | - | 1.66 | 51.69 | 0.1 | 1700 | 5 | 3.12 | 97.20 | 10 | 1700 | 1.5 | 3.18 | 99.07 | 100 | 1750 | 2 | 3.18 | ◎ | 1084 | ◎ | 3.8 | ◎ | 5.9 | ◎ | 10.0 | ◎ |
| Heat treatment under second condition | Example 3 | 4 | - | 1.65 | 51.54 | 0.1 | 1700 | 5 | 3.11 | 96.88 | 10 | 1700 | 1.5 | 3.18 | 99.07 | 100 | 1750 | 2 | 3.18 | ◎ | 1026 | ◎ | 9.2 | ◎ | 5.9 | ◎ | 7.8 | ◎ |
| | Example 4 | 4 | - | 1.65 | 51.54 | 0.1 | 1600 | 10 | 3.05 | 95.02 | 10 | 1700 | 1.5 | 3.18 | 99.07 | 100 | 1750 | 2 | 3.18 | ◎ | 944 | ◎ | 4.6 | ◎ | 5.8 | ◎ | 8.0 | ◎ |
| Heat treatment under third condition | Example 5 | 4 | - | 1.71 | 53.49 | 0.1 | 1600 | 5 | 3.10 | 96.57 | 0.8 | 1800 | 5.0 | 3.18 | 99.07 | 100 | 1750 | 2 | 3.18 | ◎ | 1089 | ◎ | 6.5 | ◎ | 6.1 | ◎ | 8.9 | ◎ |
| With CIP Heat treatment under first condition | Example 6 | 4 | ○ | 1.86 | 57.94 | 0.1 | 1600 | 10 | 3.10 | 96.57 | 10 | 1700 | 1.5 | 3.18 | 99.07 | 100 | 1750 | 2 | 3.18 | ◎ | 1105 | ◎ | 3.8 | ◎ | 5.4 | ◎ | 6.3 | ◎ |
| Heat treatment under second condition Heat treatment under third condition | Example 7 | 2.8 | ○ | 1.83 | 57.17 | 0.1 | 1600 | 10 | 2.97 | 92.81 | 10 | 1800 | 0.25 | 3.18 | 99.38 | 100 | 1750 | 1 | 3.18 | ◎ | 992 | ◎ | 3.4 | ◎ | 5.9 | ◎ | 7.3 | ◎ |
| With CIP Heat treatment under first condition | Example 8 | 4 | ○ | 1.86 | 58.00 | 0.1 | 1600 | 10 | 3.07 | 95.64 | | | | | - | 100 | 1750 | 2 | 3.18 | ◎ | 1042 | ◎ | 4.2 | ◎ | 6.0 | ◎ | 8.5 | ◎ |
| | Example 9 | 4 | ○ | 1.85 | 57.55 | 0.1 | 1600 | 10 | 3.07 | 95.64 | - | | | | - | 100 | 1750 | 2 | 3.18 | ◎ | 1032 | ◎ | 6.9 | ◎ | 5.8 | ◎ | 7.8 | ◎ |
| Heat treatment under third condition | Example 10 | 2.8 | ○ | 1.89 | 59.01 | 0.1 | 1730 | 3 | 3.1 | 96.88 | | - | | | - | 100 | 1750 | 2 | 3.18 | ◎ | 1003 | ◎ | 8.0 | ◎ | 6.3 | ◎ | 9.0 | ◎ |
| Without CIP Heat treatment under first condition | Example 11 | 4 | - | 1.66 | 51.69 | 0.1 | 1600 | 10 | 3.04 | 94.70 | | - | - | | - | 100 | 1750 | 2 | 3.18 | ◎ | 868 | × | 18.4 | × | 6.5 | × | 12.3 | × |
| | Example 12 | 4 | - | 1.58 | 49.61 | 0.1 | 1700 | 5 | 3.17 | 98.75 | | - | - | | - | 100 | 1750 | 2 | 3.18 | ◎ | 832 | × | 11.9 | × | 12.1 | × | 22.0 | × |
| | Example 13 | 4 | - | 1.58 | 49.31 | 0.1 | 1700 | 5 | 3.17 | 98.75 | - | - | - | | - | 100 | 1750 | 2 | 3.18 | ◎ | 717 | × | 8.6 | ◎ | 12.1 | × | 18.8 | × |
| Heat treatment under third condition | Example 14 | 4 | - | 1.52 | 47.39 | 0.1 | 1700 | 5 | 3.09 | 96.26 | | - | - | | - | 100 | 1750 | 5 | 3.17 | ◎ | 812 | × | 13.8 | × | 11.5 | × | 17.5 | × |
| | Example 15 | 4 | - | 1.51 | 47.2 | 0.1 | 1700 | 5 | 3.1 | 96.57 | | - | - | | - | 100 | 1750 | 5 | 3.17 | ◎ | 828 | | 11.5 | × | 12.9 | × | 20.8 | × |
| | Exam- | 4 | - | 1.59 | 49.8 | 0.1 | 1700 | 5 | 3.15 | 98.13 | - | - | - | - | | 100 | 1800 | 2 | 3.18 | ◎ | 764 | | 12.8 | | 12.2 | | 23.8 | × |

EP 4 148 031 A1

12

| | | | | | | | | | | | | | | | | | | | | | | | | | | | |
|---|---|---|---|---|---|---|---|---|---|---|---|---|---|---|---|---|---|---|---|---|---|---|---|---|---|---|---|
| | ple 16 | | | | | | | | | | | | | | | | | | | | | | | | | | |
| Without CIP Heat treatment under first condition | Exam-ple 17 | 2.8 | - | 1.65 | 51.49 | 0.1 | 1700 | 15 | 3.07 | 95.81 | 10 | 1700 | 1.5 | 3.16 | 98.7 | | | - | 3.16 | ◎ | 703 | × | 30.2 | × | 7.7 | × | 18.8 | × |
| Heat treatment under second condition | Exam-ple 18 | 2.8 | - | 1.64 | 51.16 | 0.1 | 1700 | 15 | 3.07 | 95.92 | 10 | 1700 | 1.5 | 3.16 | 98.8 | ~ | ~ | - | 3.16 | ◎ | 902 | ◎ | 29.1 | × | 7.6 | × | 17.3 | × |
| Without CIP Heat treatment under first condition | Exam-ple 19 | 4 | | 1.59 | 49.6 | 0.1 | 1700 | 15 | 3.15 | 98.4 | 10 | 1700 | 2 | | - | 100 | 1750 | 5 | 3.18 | ◎ | 997 | ◎ | 4.5 | ◎ | 6.3 | ◎ | 9.1 | ◎ |
| Heat treatment under second condition Heat treatment under third condition | Exam-ple 20 | 4 | | 1.8 | 56.2 | 0.1 | 1700 | 5 | 3.14 | 98.2 | 10 | 1700 | 2 | | | 100 | 1750 | 5 | 3.17 | ◎ | 1022 | ◎ | 7 | ◎ | 5.9 | ◎ | 8.2 | ◎ |

EP 4 148 031 A1

13

(Example 1)

In the example 1, powder of silicon nitride (SN-9FWS manufactured by Denka Company Limited) as the ceramic powder, spinel powder as the sintering aid, ion exchange water as the solvent, and tetramethylammonium hydroxide as the dispersant were put in a bead mill to be mixed and milled for 1.5 hours, and silicon nitride slurry as the raw material ceramic slurry was generated. An Sp amount, that is, a ratio of the Sp amount that is an addition amount of spinel powder with respect to the ceramic powder was caused to be 2.8 mol%.

A water-soluble epoxy resin (manufactured by Nagase ChemteX Corporation: EX614B, EX512) as resin is added to and mixed with part of the silicon nitride slurry to generate the first ceramic slurry, and a resin curing agent obtained by mixing triethylenetetramine and dimethylaminomethyl at a mass ratio of 2:1 is added to and mixed with the other part of the silicon nitride slurry to generate the second ceramic slurry.

The first ceramic slurry and the second ceramic slurry were then subjected to defoaming processing while reducing the pressure in individual tanks, sent to a mixer at the same time to be mixed to be the casting ceramic slurry while being stirred in the tanks, and supplied to a molding die connected to a mixer outlet. The molding die filled with the ceramic slurry (a mixture of the first ceramic slurry and the second ceramic slurry) was held at 50°C for 5 hours to cure the ceramic slurry, and a cured body was obtained. The cured body was then removed from the molding die, humidified and dried at 30°C for 4 days, and subjected to hot air drying at 50°C to obtain a dried green body. The dried green body was then heated at 600°C for 3 hours to remove binder therefrom, and a ceramic green body was obtained.

The green body density and the relative density was measured for the obtained ceramic green body. Herein, assuming that a value obtained by dividing a volume obtained from dimensions of the ceramic green body by a weight of the ceramic green body was the green body density, and the material density was calculated from the composition ratio between the ceramic powder and the sintering aid and the theoretical density of each material, a value obtained by dividing the green body density by the material density was assumed to be the relative density. For example, in a case of mixing silicon nitride (theoretical density of 3.18 $g/cm^3$) as the ceramic powder and magnesia-alumina spinel (theoretical density of 3.6 $g/cm^3$) as the sintering aid at a composition ratio of 95 mol% and 5 mol%, respectively, the volume of 100 g is 31.26 $cm^3$, and the material density is 3.20 $g/cm^3$.

In the example 1, the CIP processing was not performed on the ceramic green body. The ceramic green body was then subjected to the heat treatment at 1600°C for 10 hours in the nitrogen atmosphere with a pressure of 0.1 MPa as the heat treatment under the first condition to obtain the first sintered body.

A sintered body density and the relative density were measured for the obtained first sintered body. The sintered body density was measured in accordance with JIS R 1634. Assuming that the material density was calculated from the composition ratio between the ceramic powder and the sintering aid and the theoretical density of each material, a value obtained by dividing the sintered body density by the material density was assumed to be the relative density.

The first sintered body was then subjected to the heat treatment at 1700°C for 1.5 hours in the nitrogen atmosphere with a pressure of 10 MPa as the heat treatment under the second condition to obtain the second sintered body.

The sintered body density and the relative density were measured for the obtained second sintered body.

The second sintered body was then subjected to the heat treatment at 1750°C for 2 hours in the nitrogen atmosphere with a pressure of 100 MPa as the heat treatment under the third condition to obtain the ceramic sintered body.

A density, an average strength, a pore frequency, an average pore diameter, and a maximum pore diameter were measured for the obtained ceramic sintered body. The average strength was measured by an Autocom universal testing machine (AC-100KN-C manufactured by T.S.E Co., Ltd.). The pore frequency indicates the number of pores having a size equal to or larger than 5 $\mu$m per an area of 1 $mm^2$, the pores being observed by using an optical microscope with respect to an area equal to or larger than 1 $mm^2$ on the surface obtained by polishing the cross section of the ceramic sintered body. The average pore diameter was measured by an industrial microscope (LV100 manufactured by Nikon Corporation). The maximum pore diameter was measured by the industrial microscope (LV100 manufactured by Nikon Corporation).

(Example 2)

In an example 2, the ceramic sintered body was manufactured by using the same method as that in the example 1 except that the Sp amount was caused to be 4 mol%, and the heat treatment under the first condition was performed at 1700°C for 5 hours.

(Example 3)

In an example 3, the ceramic sintered body was manufactured by using the same method as that in the example 2.

(Example 4)

In an example 4, the ceramic sintered body was manufactured by using the same method as that in the example 1 except that the Sp amount was caused to be 4 mol%.

(Example 5)

In an example 5, the Sp amount was caused to be 4 mol%, and the heat treatment under the first condition was performed at 1600°C for 5 hours to obtain the first sintered body. The first sintered body was then subjected to the heat treatment at 1800°C for 5 hours in the nitrogen atmosphere with a pressure of 0.8 MPa as the heat treatment under the second condition to obtain the second sintered body. The second sintered body was then subjected to the heat treatment at 1750°C for 2 hours in the nitrogen atmosphere with a pressure of 100 MPa as the heat treatment under the third condition to obtain the ceramic sintered body.

(Example 6)

In an example 6, the ceramic sintered body was manufactured by using the same method as that in the example 1 except that the Sp amount was caused to be 4 mol% and the CIP processing was performed on the ceramic green body.

(Example 7)

In an example 7, the ceramic sintered body was manufactured by using the same method as that in the example 1 except that the CIP processing was performed on the ceramic green body, and the heat treatment under the second condition was performed at 1800°C for 0.25 hours.

(Example 8)

In an example 8, the ceramic sintered body was manufactured by using the same method as that in the example 1 except that the Sp amount was caused to be 4 mol%, the CIP processing was performed on the ceramic green body, and the heat treatment under the second condition was not performed.

(Example 9)

In an example 9, the ceramic sintered body was manufactured by using the same method as that in the example 8.

(Example 10)

In an example 10, the ceramic sintered body was manufactured by using the same method as that in the example 1 except that the CIP processing was performed on the ceramic green body, the heat treatment under the first condition was performed at 1730°C for 3 hours, and the heat treatment under the second condition was not performed.

(Example 11)

In an example 11, the ceramic sintered body was manufactured by using the same method as that in the example 1 except that the Sp amount was caused to be 4 mol%, and the heat treatment under the second condition was not performed.

(Example 12)

In an example 12, the ceramic sintered body was manufactured by using the same method as that in the example 1 except that the Sp amount was caused to be 4 mol%, the heat treatment under the first condition was performed at 1700°C for 5 hours, and the heat treatment under the second condition was not performed.

(Example 13)

In an example 13, the ceramic sintered body was manufactured by using the same method as that in the example 12.

(Example 14)

In an example 14, the ceramic sintered body was manufactured by using the same method as that in the example 1 except that the Sp amount was caused to be 4 mol%, the heat treatment under the first condition was performed at 1700°C for 5 hours, the heat treatment under the second condition was not performed, and the heat treatment under the third condition was performed at 1750°C for 5 hours.

(Example 15)

In an example 15, the ceramic sintered body was manufactured by using the same method as that in the example 14.

(Example 16)

In an example 16, the ceramic sintered body was manufactured by using the same method as that in the example 1 except that the Sp amount was caused to be 4 mol%, the heat treatment under the first condition was performed at 1700°C for 5 hours, the heat treatment under the second condition was not performed, and the heat treatment under the third condition was performed at 1800°C for 2 hours.

(Example 17)

In an example 17, the ceramic sintered body was manufactured by using the same method as that in the example 1 except that the heat treatment under the first condition was performed at 1700°C for 15 hours, the heat treatment under the second condition was performed at 1700°C for 1 hour, and the heat treatment under the third condition was not performed.

(Example 18)

In an example 18, the ceramic sintered body was manufactured by using the same method as that in the example 17.

(Example 19)

In an example 19, the ceramic sintered body was manufactured by using the same method as that in the example 1 except that the Sp amount was caused to be 4 mol%, the heat treatment under the first condition was performed at 1700°C for 15 hours, the heat treatment time under the second condition was 2 hours, and the heat treatment time under the third condition was 5 hours.

(Example 20)

In an example 20, the ceramic sintered body was manufactured by using the same method as that in the example 1 except that the Sp amount was caused to be 4 mol%, the heat treatment under the first condition was performed at 1700°C for 5 hours, the heat treatment time under the second condition was 2 hours, and the heat treatment time under the third condition was 5 hours.

(Evaluation results)

The density of the ceramic sintered body equal to or higher than 3.15 g/cm$^3$ was determined to be "pass", and the density less than 3.15 g/cm$^3$ was determined to be "failure". The average strength of the ceramic sintered body equal to or higher than 900 MPa as determined to be "pass", and the average strength lower than 900 MPa was determined to be "failure". The pore frequency of the ceramic sintered body equal to or smaller than 10 was determined to be "pass", and the pore frequency larger than 10 was determined to be "failure". The average pore diameter of the ceramic sintered body equal to or smaller than 6.4 $\mu$m was determined to be "pass", and the average pore diameter larger than 6.4 $\mu$m was determined to be "failure". The maximum pore diameter of the ceramic sintered body equal to or smaller than 1.0 $\mu$m was determined to be "pass", and the maximum pore diameter larger than 10 $\mu$m was determined to be "failure".

The example 8 to the example 10 are reference examples, and it can be found that a dense ceramic sintered body having high strength can be manufactured even with two stages of heat treatment by performing the CIP processing. On the other hand, the example 11 to the example 18 are comparative examples, and it can be found that a dense ceramic sintered body having high strength cannot be manufactured in a case of performing two stages of heat treatment without performing the CIP processing. The example 1 to the example 5, the example 19, and the example 20 are implementation examples, and it can be found that a dense ceramic sintered body having high strength can be manufactured by performing three stages of heat treatment even when the CIP processing is not performed. The example 6 and the example 7 are also implementation examples, and it can be found that a dense ceramic sintered body having high strength can be manufactured by performing three stages of heat treatment after performing the CIP processing. Furthermore, it can be found that the number of pores and the size thereof are reduced as compared with a case of not performing the CIP processing.

(Implementation example 2)

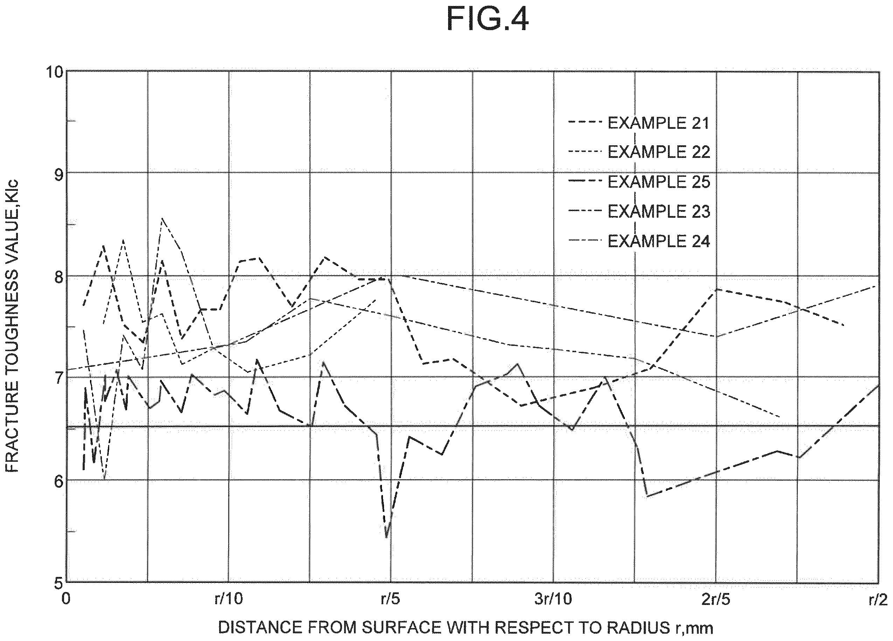

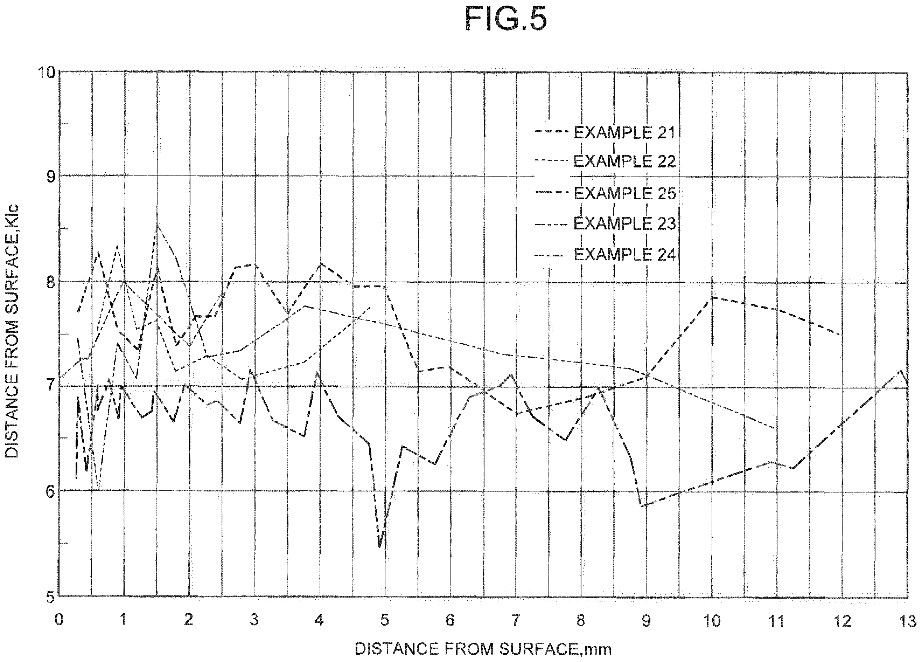

Next, the following describes an implementation example 2 of evaluating the fracture toughness value of the ceramic sintered body. Examples 21, 22, and 24 are implementation examples, and examples 23 and 25 are comparative examples. Table 2 describes manufacturing conditions for the ceramic sintered bodies according to the respective examples. Table 3 indicates evaluation results of the ceramic sintered bodies according to the respective examples. FIG. 4 and FIG. 5 are graphs indicating the fracture toughness value in the implementation example 2. FIG. 4 illustrates the fracture toughness value for each distance from the surface with respect to the radius r, and FIG. 5 illustrates the fracture toughness value for each distance (absolute value) from the surface.

Table 2

| | | Forming condition | | Characteristic of green body | | First condition | | | Characteristic of first sintered body | | Second condition | | | Characteristic of second sintered body | | Third condition | | | Ceramic sintered body density |
|---|---|---|---|---|---|---|---|---|---|---|---|---|---|---|---|---|---|---|---|
| | | DS amount | CIP | Green body density | Relative density | Pressure | Temperature | Time | Sintered body density | Relative density | Pressure | Temperature | Time | Sintered body density | Relative density | Pressure | Temperature | Time | |
| | | mol% | | g/cm³ | % | MPa | °C | h | g/cm³ | % | MPa | °C | h | g/cm³ | % | MPa | °C | h | g/cm³ |
| Without CIP 50mm ball Heat treatment under first condition | Example 21 | 4 | – | 1.71 | 53.6 | 0.1 | 1400 | 5 | 2.25 | 70.40 | 0.8 | 1800 | 5 | 3.17 | 99.00 | 100 | 1750 | 5 | 3.18 |
| Heat treatment under second condition Heat treatment under third condition | Example 22 | 4 | – | 1.70 | 53.2 | 0.1 | 1600 | 5 | 2.97 | 92.81 | 0.8 | 1800 | 5 | 3.17 | 99.06 | 100 | 1750 | 5 | 3.18 |
| Without CIP Heat treatment under second condition Heat treatment under third condition | Example 23 | 4 | – | 1.72 | 53.9 | – | – | – | – | – | 0.8 | 1800 | 5 | 3.16 | 98.84 | 100 | 1750 | 5 | 3.18 |
| Without CIP 10mm ball Heat treatment under first condition Heat treatment under second condition Heat treatment under third condition | Example 24 | 4 | – | 1.73 | 54.1 | 0.1 | 1600 | 3.5 | 3.02 | 94.28 | 0.8 | 1800 | 5 | 3.17 | 98.94 | 100 | 1750 | 5 | 3.18 |
| With CIP | Example 25 | 2.8 | ◯ | 1.86 | 58.13 | 0.1 | 1700 | 15 | 3.11 | 97.19 | 10 | 1700 | 1.5 | 3.18 | 99.38 | – | – | – | 3.18 |

Table 3

| | Diameter | K$_{IC}$ minimum value (from surface to r/10) | ΔKA | ΔKB | K$_{IC}$ minimum value (from surface to 2r/10) | K$_{IC}$ average value (from surface to 4r/10) | K$_{IC}$ standard deviation (from surface to r/10) | K$_{IC}$ standard deviation (from surface to 4r/10) | Vickers hardness minimum value (from surface to 2r/10) | Evaluation of abrasiveness | |
|---|---|---|---|---|---|---|---|---|---|---|---|
| | mm | MPa·m$^{1/2}$ | MPa·m$^{1/2}$ | MPa·m$^{1/2}$ | MPa·m$^{1/2}$ | MPa·m$^{1/2}$ | | | HV | μm | |
| Example 21 | 51 | 7.35 | 0.97 | 0.48 | 7.35 | 7.64 | 0.35 | 0.47 | 14.6 | 320 | ○ |
| Example 22 | 50 | 7.13 | 1.23 | 0.73 | 7.05 | 7.51 | 0.42 | (not measured) | 15 | 200 | ○ |
| Example 23 | 51 | 5.99 | 2.57 | 0.42 | 5.99 | 7.38 | 0.83 | 0.63 | 14.6 | 500 | × |
| Example 24 | 12 | 7.07 | 0.25 | 0.50 | 7.07 | 7.50 | 0.18 | 0.31 | 14.9 | 280 | ○ |
| Example 25 | 50 | 6.11 | 0.98 | 1.74 | 5.44 | 6.65 | 0.32 | 0.41 | 14.5 | 750 | × |

(Example 21)

In an example 21, a ceramic sintered body of silicon nitride having a ball shape was manufactured. An obtained diameter was 51 mm.

In the example 21, a molding die having a ball shape (diameter 64 mm) was used as the molding die, and a silicon nitride sintered body having a ball shape was obtained as the ceramic sintered body. Conditions different from those in the example 1 are as follows. The Sp amount was caused to be 4 mol%, and the heat treatment under the first condition was performed at 1400°C for 5 hours to obtain the first sintered body. The first sintered body was subjected to the heat treatment at 1800°C for 5 hours in the nitrogen atmosphere with a pressure of 0.8 MPa as the heat treatment under the second condition to obtain the second sintered body. The second sintered body was subjected to the heat treatment at 1750°C for 5 hours as the heat treatment under the third condition to obtain the ceramic sintered body (silicon nitride sintered body). The ceramic sintered body (silicon nitride sintered body) was manufactured by using the same method as that in the example 1 except for the points described above.

The fracture toughness value ($K_{IC}$) and the Vickers hardness were measured for the obtained ceramic sintered body. By cutting out the ceramic sintered body in a disc shape having a thickness of 10 mm to pass through the diameter thereof, and polishing one of cutting surfaces thereafter, $K_{IC}$ was measured along the radial direction of the ball. Table 3 indicates a minimum value of $K_{IC}$ in the region from the surface to the depth of r/10, a difference $\Delta KA$ between a maximum value and the minimum value of $K_{IC}$ in the range from the surface to the depth of r/10, a difference $\Delta KB$ between the maximum value and the minimum value of $K_{IC}$ in a range from the position at the depth of r/10 below the surface to the depth of 2r/10 below the surface, the minimum value of $K_{IC}$ in the range from the surface to the depth of 2r/10, an average value of $K_{IC}$ in the range from the surface to the depth of 4r/10, a standard deviation of $K_{IC}$ in the range from the surface to the depth of r/10, a standard deviation of $K_{IC}$ in the range from the surface to the depth of 4r/10, and a minimum value of the Vickers hardness in the range from the surface to the depth of 2r/10. Herein, r is the radius of the ceramic sintered body.

Measurement was performed under the condition that the load was 5 kg and the push-in time was 15 seconds by using the Vickers hardness testing system ARS9000 manufactured by FUTURE-TECH CORP.

(Example 22)

In an example 22, the ceramic sintered body was manufactured by using the same method as that in the example 21 except that the diameter of the molding die was 63 mm, and the heat treatment under the first condition was performed at 1600°C for 5 hours. The diameter of the obtained ceramic sintered body was 50 mm.

(Example 23)

In an example 23, the ceramic sintered body was manufactured by using the same method as that in the example 21 except that the heat treatment under the first condition was not performed. The diameter was 51 mm.

(Example 24)

In an example 24, the ceramic sintered body was manufactured by using the same method as that in the example 21 except that the diameter of the molding die having a ball shape was 15 mm, and the heat treatment under the first condition was performed at 1600°C for 3.5 hours. The diameter of the obtained ceramic sintered body was 12 mm.

(Example 25)

In an example 25, the ceramic sintered body was manufactured by using the same method as that in the example 17 except that the green body subjected to the CIP processing was processed to have a diameter of 60.8 mm. The diameter was 50 mm.

As evaluation of wear resistance, easiness of being damaged in a case of rubbing the ceramic sintered body with waterproof polishing paper (US#500 manufactured by Struers LLC) was evaluated for each ceramic sintered body. A sample for evaluation was made similarly to a sample for measurement for the fracture toughness value. After the sample for evaluation was rubbed in the radial direction from the surface, a length of a scratch in the radial direction from the surface was measured by an optical microscope. In a case in which the length of the scratch in the radial direction from the surface was equal to or smaller than 400 μm, "pass" (O) was determined. In a case in which the length of the scratch exceeded 400 μm, "failure" (×) was determined.

As indicated by Table 3, in the examples 21, 22, and 24 as implementation examples, $K_{IC}$, $\Delta KA$, and $\Delta KB$ in the region from the surface to the depth of r/10 are equal to or larger than 6.5, equal to or smaller than 2.0, and equal to or smaller than 1.5, respectively. Accordingly, it can be found that densification is achieved, and the wear resistance is improved. On the other hand, in the example 23 and the example 25 as comparative examples, at least one of $K_{IC}$, $\Delta KA$, and $\Delta KB$ in the region from the surface to the depth of r/10 deviates from the range described above, and it can be found that the wear resistance cannot be improved.

The embodiment and implementation examples of the present invention have been described above, but the embodiment and implementation examples are not limited thereto. The constituent elements described above include a constituent element that is easily conceivable by those skilled in the art, substantially the same constituent element, and what is called an equivalent. Furthermore, the constituent elements described above can be appropriately combined. In addition, the constituent elements can be various omitted, replaced, or modified without departing from the gist of the embodiments described above.

Reference Signs List

10 HEAT TREATMENT FURNACE

**Claims**

1.  A manufacturing method for a ceramic sintered body, the manufacturing method comprising:

    a step of performing heat treatment on a ceramic green body as a green body of ceramic powder under a first condition;
    a step of performing heat treatment, under a second condition with a higher pressure than the first condition, on the ceramic green body subjected to the heat treatment under the first condition; and
    a step of performing heat treatment, under a third condition with a higher pressure than the second condition, on the ceramic green body subjected to the heat treatment under the second condition to manufacture the ceramic sintered body.

2.  The manufacturing method for the ceramic sintered body according to claim 1, wherein

    a difference between a pressure applied to the ceramic green body at the step of performing the heat treatment under the second condition and a pressure applied to the ceramic green body at the step of performing the heat treatment under the first condition is caused to be equal to or higher than 0.3 MPa and equal to or lower than 20 MPa, and
    a difference between a pressure applied to the ceramic green body at the step of performing the heat treatment under the third condition and the pressure applied to the ceramic green body at the step of performing the heat treatment under the second condition is caused to be equal to or higher than 30 MPa and equal to or lower than 180 MPa.

3.  The manufacturing method for the ceramic sintered body according to claim 1 or 2, wherein

    a pressure applied to the ceramic green body at the step of performing the heat treatment under the first condition is caused to be equal to or higher than 0.01 MPa and equal to or lower than 5 MPa,
    a pressure applied to the ceramic green body at the step of performing the heat treatment under the second condition is caused to be equal to or higher than 0.3 MPa and equal to or lower than 20 MPa, and
    a pressure applied to the ceramic green body at the step of performing the heat treatment under the third condition is caused to be equal to or higher than 50 MPa and equal to or lower than 200 MPa.

4.  The manufacturing method for the ceramic sintered body according to any one of claims 1 to 3, wherein

    a temperature for the heat treatment under the first condition is caused to be equal to or higher than 1600°C and equal to or lower than 1800°C,
    a temperature for the heat treatment under the second condition is caused to be equal to or higher than 1700°C and equal to or lower than 1900°C, and
    a temperature for the heat treatment under the third condition is caused to be equal to or higher than 1700°C and equal to or lower than 1900°C.

5.  The manufacturing method for the ceramic sintered body according to any one of claims 1 to 4, the manufacturing method further comprising a step of forming the ceramic powder by using a gel casting method to generate the ceramic green body.

6. The manufacturing method for the ceramic sintered body according to any one of claims 1 to 5, wherein the ceramic sintered body is a sintered body of silicon nitride.

7. The manufacturing method for the ceramic sintered body according to claim 6, wherein the ceramic green body is subjected to heat treatment in a nitrogen atmosphere at the steps of performing the heat treatment under the first condition, the second condition, and the third condition.

8. The manufacturing method for the ceramic sintered body according to claim 6 or 7, wherein

regarding the ceramic sintered body manufactured by being subjected to the heat treatment under the third condition,
a three-point bending strength with a span of 30 mm measured by using a method defined by JIS R 1669 is equal to or higher than 900 MPa,
a fracture toughness value measured by using a method defined by JIS R 1669 is equal to or larger than 6.0 MPa $\cdot m^{1/2}$,
number of pores having a size equal to or larger than 5 $\mu m$ that are observed by using an optical microscope with respect to an area equal to or larger than 1 $mm^2$ on a surface obtained by polishing an optional cross section is equal to or smaller than 10 per area of 1 $mm^2$, and
a maximum diameter of the pores is equal to or smaller than 10 $\mu m$.

9. The manufacturing method for the ceramic sintered body according to any one of claims 1 to 8, wherein a ball-shaped ceramic sintered body having a diameter of 0.5 mm to 80 mm is manufactured as the ceramic sintered body.

10. A ceramic sintered body of silicon nitride having a ball shape, wherein

assuming that a radius of the ceramic sintered body is r, a fracture toughness value ($K_{IC}$) in a region from a surface of the ceramic sintered body to 1/10r is equal to or larger than 6.5 MPa $\cdot m^{1/2}$,
a difference $\Delta KA$ between a maximum value and a minimum value of the fracture toughness value in the region from the surface of the ceramic sintered body to 1/10r is equal to or smaller than 2.0 MPa $\cdot m^{1/2}$, and
a difference $\Delta KB$ between a maximum value and a minimum value of the fracture toughness value in a region from 1/10r to 2/10r of the ceramic sintered body is equal to or smaller than 1.5 MPa $\cdot m^{1/2}$.

11. The ceramic sintered body according to claim 10, wherein the fracture toughness value in a region from the surface of the ceramic sintered body to 2/10r is equal to or larger than 6.5 MPa $\cdot m^{1/2}$.

12. The ceramic sintered body according to claim 10 or 11, wherein an average value of the fracture toughness value in a region from the surface of the ceramic sintered body to 4/10r is equal to or larger than 7.0 MPa $\cdot m^{1/2}$.

13. The ceramic sintered body according to any one of claims 10 to 12, wherein a standard deviation of the fracture toughness value in a region from the surface of the ceramic sintered body to 1/10r is equal to or smaller than 0.70.

14. The ceramic sintered body according to claim 13, wherein a standard deviation of the fracture toughness value in a region from the surface of the ceramic sintered body to 4/10r is equal to or smaller than 0.55.

15. The ceramic sintered body according to any one of claims 10 to 14, wherein a diameter is equal to or larger than 0.5 mm and equal to or smaller than 80 mm.

16. The ceramic sintered body according to any one of claims 10 to 15, wherein Vickers hardness in a region from the surface of the ceramic sintered body to 2/10r is equal to or higher than 10 Hv.

# FIG.1

START

S10

GENERATE CERAMIC GREEN BODY

S12

PERFORM HEAT TREATMENT UNDER
FIRST CONDITION

S14

PERFORM HEAT TREATMENT UNDER
SECOND CONDITION

S16

PERFORM HEAT TREATMENT UNDER
THIRD CONDITION

END

# FIG.2

START

S10b

GENERATE CERAMIC SLURRY

S10c

CAST CERAMIC SLURRY INTO MOLDING
DIE

S10d

OBTAIN CERAMIC GREEN BODY BY
REMOVING IT FROM MOLDING DIE AND
REMOVING BINDER THEREFROM

END

# FIG.3

FIG.4

# FIG.5

## INTERNATIONAL SEARCH REPORT

| International application No. |
| --- |
| PCT/JP2021/017471 |

### A. CLASSIFICATION OF SUBJECT MATTER
C04B 35/645(2006.01)i; C04B 35/00(2006.01)i; C04B 35/584(2006.01)i; C04B 35/587(2006.01)i; C04B 35/622(2006.01)i
FI: C04B35/645; C04B35/587; C04B35/622; C04B35/584; C04B35/00
According to International Patent Classification (IPC) or to both national classification and IPC

### B. FIELDS SEARCHED

Minimum documentation searched (classification system followed by classification symbols)
C04B35/645; C04B35/00; C04B35/584; C04B35/587; C04B35/622

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
JSTPlus/JST7580/JSTChina (JDreamIII)

### C. DOCUMENTS CONSIDERED TO BE RELEVANT

| Category* | Citation of document, with indication, where appropriate, of the relevant passages | Relevant to claim No. |
| --- | --- | --- |
| X | JP 2002-12475 A (NISSAN MOTOR CO., LTD.) 15 January 2002 (2002-01-15) claims 1, 3 | 1, 6, 7, 9 |
| A | claims 1, 3 | 2-5, 8, 10-16 |
| X | JP 59-45970 A (SUMITOMO ELECTRIC INDUSTRIES, LTD.) 15 March 1984 (1984-03-15) claim 1 | 1, 6, 9 |
| A | JP 5-148035 A (UBE INDUSTRIES, LTD.) 15 June 1993 (1993-06-15) claim 1 | 1-16 |
| A | JP 2006-16233 A (NGK SPARK PLUG CO., LTD.) 19 January 2006 (2006-01-19) paragraphs [0035], [0036], [0041], [0042] | 1-16 |

☒ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 09 July 2021 (09.07.2021) | 20 July 2021 (20.07.2021) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2021/017471 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2005-324138 A (ASAHI GLASS CO., LTD.) 24 November 2005 (2005-11-24) claim 1, paragraphs [0051]-[0053] | 1-16 |
| A | JP 2001-261446 A (NGK SPARK PLUG CO., LTD.) 26 September 2001 (2001-09-26) claim 1, paragraph [0002] | 1-16 |

Form PCT/ISA/210 (continuation of second sheet) (January 2015)

| INTERNATIONAL SEARCH REPORT<br>Information on patent family members | | International application No.<br>PCT/JP2021/017471 | |
|---|---|---|---|
| Patent Documents referred in the Report | Publication Date | Patent Family | Publication Date |
| JP 2002-12475 A | 15 Jan. 2002 | (Family: none) | |
| JP 59-45970 A | 15 Mar. 1984 | EP 79678 A1<br>claim 1 | |
| JP 5-148035 A | 15 Jun. 1993 | (Family: none) | |
| JP 2006-16233 A | 19 Jan. 2006 | (Family: none) | |
| JP 2005-324138 A | 24 Nov. 2005 | (Family: none) | |
| JP 2001-261446 A | 26 Sep. 2001 | (Family: none) | |

Form PCT/ISA/210 (patent family annex) (January 2015)

**REFERENCES CITED IN THE DESCRIPTION**

**Patent documents cited in the description**

- JP 4642956 B
- JP 6075811 B
- JP 6400478 B